# EUROPEAN PATENT APPLICATION

(11) **EP 3 010 107 A1**
(43) Date of publication of application: **20.04.2016**
(21) Application number: 14188676.2
(22) Date of filing: 13.10.2014
(51) Int. Cl.: H02J 3/32

(54) **State of charge management in battery systems**

(71) Applicant: ABB Technology AG, 8050 Zürich (CH)
(72) Inventor: Oudalov, Alexandre, 5442 Fislisbach (CH); Poland, Jan, 5415 Nussbaumen (CH); Ferreau, Joachim, 5436 Würenlos (CH); Patey, Timothy, 8004 Zürich (CH); Park, Chan, 8488 Turbenthal (CH); Korba, Petr, 5300 Turgi (CH)
(74) Representative: ABB Patent Attorneys

(57) **Abstract**

The present invention is concerned with reduced calendar aging of a battery in a Battery Energy Storage System BESS for capacity firming or for load peak shaving. The invention takes advantage of the fact that load or production profiles for various applications may be known in advance, and may specifically be known to exhibit significantly varying characteristics, such as a day-night cycle or a working day vs. holiday distinction, with periods during which no or less battery intervention is required as compared to other periods. This is the case for instance with industrial load peaks exclusively occurring during working hours, and with energy production of solar power plants that follows a day-night cycle. Performance and battery aging in BESS operation are optimized by reducing a target average State of Charge of the battery during idle periods with less or no battery discharge.

## Description

### FIELD OF THE INVENTION

The invention relates to the field of Battery Energy Storage Systems, specifically to strategies for managing the state of charge of a battery which is used to perform peak load shaving for a utility customer or capacity firming for a renewable power plant.

### BACKGROUND OF THE INVENTION

Battery Energy Storage Systems (BESS) are becoming more and more important in electrical power systems. A main driver is the increasing integration of intermittent renewable energy sources such as solar and wind power. As these renewable sources largely fluctuate in time some kind of "smoothing" of the power output at the producer side is necessary. One aspect thereof is "generation peak shaving" where generation peaks exceeding a transmission load capacity are shaved by charging a battery. In other words, with such "transmission load levelling" produced energy peaks need to be buffered in order to avoid overloading of the existing grid infrastructure. A complementary aspect thereof is *capacity firming* where a temporary reduction in renewable power output needs to be compensated or balanced by injecting stored battery power. Compensation of a power deficit by discharging a battery is particularly important for photovoltaic and solar thermal power plants, as well as for wind power plants.

On the other hand, *load peak shaving* applications at industrial customers of an electric power utility, where the BESS provides power to a load whenever a demand exceeds some level, likewise increase in importance. These applications reduce peak power costs that industrial customers otherwise have to pay to the utilities. A battery that is used for capacity firming or for load peak shaving should have a State of Charge (SoC) close to fully charged in preparation of a maximum energy boost. In this context, over-dimensioning of the BESS and operating the battery with a target SoC that is considerably below a nominal SoC limit is less preferred.

At present, a very important class of batteries considered for small to mid-size applications is lithium ion (Li-Ion) batteries. The degradation of Li-Ion batteries is subject to substantial on-going research and still not fully understood, but it is known that degradation is taking place with the load cycles of the battery on the one hand ("cycle degradation") and with time elapsing on the other hand ("calendar aging"). Both cycle degradation and calendar aging significantly depend on a plurality of factors including battery temperature, voltage, rate of charge/discharge, Depth of Discharge (DoD), as well as the State of Charge (SoC) indicative of the accumulated energy stored in the battery. Cycle degradation in addition depends on the charge/discharge currents or energy throughput. In Li-Ion batteries calendar ageing at elevated temperatures may lead to a loss of 25% of the capacity within one year at an average SoC of 85% or higher. Accordingly, as a common practice, vendors deliver Li-Ion battery at about 30% SoC in order to minimize capacity losses during delivery.

Having the ability to supply or absorb large amounts of power in milliseconds, batteries are in fact very suitable for capacity firming or for load peak shaving, as well as for ramp rate limitation and frequency regulation. However, since energy capacity is still an important cost factor, it is crucial to correctly dimension the battery size to the application and to operate the battery in the least stressful way possible. A BESS controller that optimizes both performance and lifetime of a BESS for capacity firming or for load peak shaving thus faces conflicting objectives, with the SoC to be kept close to 100% to maximize performance, which in turn may lead to significantly faster aging.

The patent US 8362643 discloses a battery-based grid energy storage for balancing the load of a power grid. The grid energy storage has a bi-directional inverter system to charge a battery array using power from a power grid or to transmit power from the battery array to the power grid. A monitor system is provided to detect a load, frequency and phase of the power grid and to control the bi-directional inverter system in accordance with the frequency and phase of the power grid. Requirements during peaks hours of the electric power consumption are met and the load of the power grid is balanced.

A paper by A. Hoke et al. entitled "Electric Vehicle Charge Optimization Including Effects of Lithium-Ion Battery Degradation", published at the Vehicle Power and Propulsion Conference (VPPC), 2011 IEEE, 6-9 Sept. 2011, discloses minimizing the cost of electric vehicle (EV) charging given variable electricity costs while also accounting for estimated costs of battery degradation. The latter includes costs associated with capacity fade and power fade due to temperature, State of Charge (SoC), and Depth of Discharge (DoD). In optimized charging profiles, the EVs exhibit a tendency to charge late in an overnight charging period to avoid capacity fade due to high SoC, and do not charge at the maximum available power even during a short low-cost interval to avoid the high temperature related capacity and power fade that comes with high charging powers.

### DESCRIPTION OF THE INVENTION

It is therefore an objective of the invention to reduce calendar aging without compromising on performance of a battery in a Battery Energy Storage System for capacity firming or for load peak shaving, and specifically to extend a lifetime of the battery without increasing a size thereof This objective is achieved by a method and a controller according to the independent claims. Preferred embodiments are evident from the dependent patent claims.

The invention takes advantage of the fact that load or production profiles for various applications may be known in advance, and may specifically be known to exhibit significantly varying characteristics, such as a day-night cycle or a working day vs. holiday distinction, with periods during which no or less battery intervention is required as compared to other periods. This is the case for instance with industrial load peaks exclusively occurring during working hours, and with energy production of solar power plants that follows a day-night cycle. Accordingly, battery operation may be adapted or tuned respective of the load or production profile.

According to the invention, performance and battery aging in BESS operation are optimized by reducing a target average State of Charge (SoC) of the battery during idle periods with less or no battery discharge. Specifically, control of a battery of a Battery Energy Storage System (BESS) for load peak power shaving through provision of battery power to a fluctuating industrial customer sourced from a utility power grid, or for production source power capacity firming, or negative generation peak shaving, through provision of battery power to a utility power grid sourced from a fluctuating renewable power source, includes the following steps.

A future load or production profile of the industrial customer or power source is estimated. This estimation may be performed repeatedly, based on updated consumption or production forecast data, wherein the latter in turn may involve short to mid-term weather forecast for renewable power generation.

In the load profile, an idle period with a normalized load peak energy that is lower than a normalized load peak energy in an active period preceding the idle period is identified. Here the normalized load peak energy is an average or a rate of an integrated or consolidated peak power, wherein the peak power is an excess power demand from the industrial customer above a predefined power consumption level. Alternatively, in the production profile, an idle period with a normalized source energy deficit that is lower than a source energy deficit in an active period preceding the idle period is identified. Here the normalized source energy deficit is an average or rate of an integrated or consolidated source power deficit, wherein the source power deficit is an amount by which a renewable power produced by the renewable power source is below a predetermined power production level.

A target average State of Charge SoC of the BESS is reduced for the duration of the idle period as compared to the active period.

In a preferred variant, a SoC of the battery is lowered at a predefined point in time no later than the beginning of the idle period to or at least close to the target SoC by providing battery power to the industrial customer or to the utility power grid, respectively, in the absence of a load peak or source power deficit.

In a preferred variant, a SoC of the battery is lowered gradually during a transition period prior to the idle period, towards the target SoC by providing battery power to the industrial customer or to the utility power grid, respectively, in load peak shaving events or in source power deficit compensation events without subsequently recharging the battery.

In summary, the invention can be embodied in any BESS application for production or load balancing, where the BESS functions to quickly supply power on demand and where, consequently, the battery is maintained in a high SoC. Periods over which the demand is lower than what the BESS has been dimensioned for need to be known in advance or at least forecasted during operation. Relevant applications may comprise industrial load peak power shaving and capacity firming, as well as grid frequency regulation and ramp rate control applications where the probability distribution of energy to be provided by the battery may likewise display significant variations, e.g. following a day / night cycle or according to a day of the week. In negative ramp rate limitation the criterion of "excess demand" depends on power differences.

### BRIEF DESCRIPTION OF THE DRAWINGS

The subject matter of the invention will be explained in more detail in the following text with reference to preferred exemplary embodiments which are illustrated in the attached drawings, in which:
- Fig.1: depicts both a power system and an industrial customer with a BESS; and
- Fig.2: depicts an example for peak shaving of an industrial load.

### DETAILED DESCRIPTION OF PREFERRED EMBODIMENTS

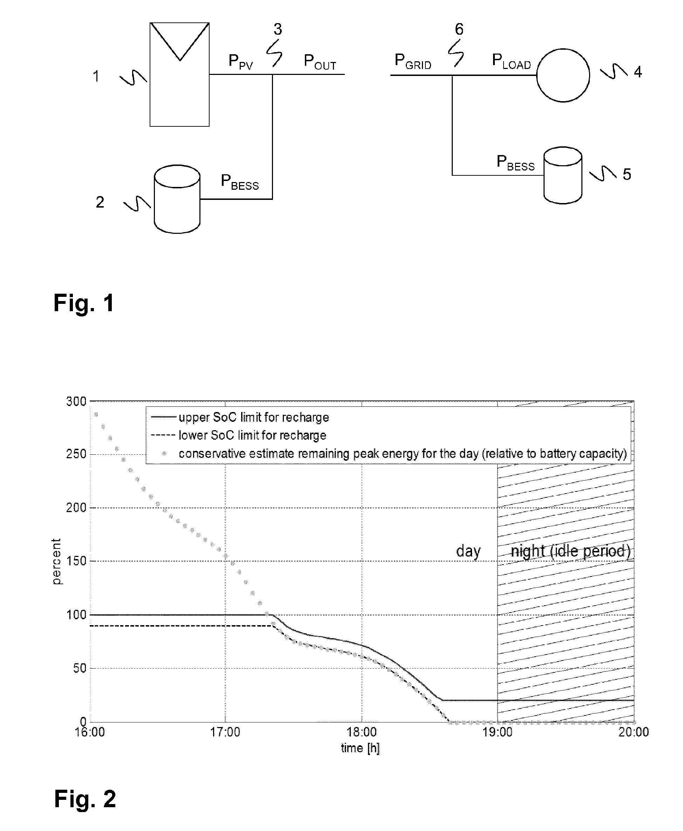

Fig.1 depicts, on the left hand side, a renewable power system including a photovoltaic (PV) plant 1 and a Battery Energy Storage System (BESS) with a battery 2 which together provide electrical power P_{OUT} to an electrical power grid via a Point of Common Coupling (PCC) 3. The right hand side depicts an industrial customer site with a load 4 such as a motor and a BESS 5 connected to the power grid at another PCC 6. Power converters and/or transformers may be provided at a PCC and at a BESS, with a BESS converter controlling the power flow between the battery and an AC or DC micro-grid that extends up to the PCC.

In the case of capacity firming for renewable generation, the output power P_{PV} of the PV plant is given by the present solar irradiance conditions while the power P_{BESS} discharged from the battery to the grid represents a continuous degree of freedom that is exploited by a BESS controller. The power balance is P_{OUT} = P_{PV} + P_{BESS}.

In the case of load peak shaving at the industrial customer, the power demand of the load P_{LOAD} is satisfied by a grid power P_{GRID} and a battery power P_{BESS} discharged from the battery to the load that again represents a continuous degree of freedom that is exploited by a BESS controller. The power balance is P_{GRID} = P_{LOAD} - P_{BESS}.

In times where the BESS does not need to be ready to immediately supply power, the SoC of the battery is reduced which in turn reduces calendar aging. Applicable time periods are designated idle time periods, where for instance in the case of peak shaving for a production plant, the nights and the weekends represent such idle time periods.

A simple way of reducing the SoC in idle times is to deliberately discharge the battery to some specified target SoC at the beginning of an idle time period by supplying the energy to a base load.

A somewhat more sophisticated way, which also benefits cycle degradation of the battery, is realized by using the excess energy for peak load shaving prior to the idle time period and without subsequent recharging of the battery. In order to correctly decide at which point in time no more active recharging should take place, a conservative estimate on the remaining cumulative peak energy to be supplied by the battery prior to the idle period can be used. Such estimate can be obtained from historical data and statistical modeling, and include an assumption or forecast on the number and magnitude of load shaving events to be expected before the idle period. Once this estimate is given, the battery is actively recharged after a discharge event corresponding to a load peak only if the present SoC after the event is below the estimated remaining cumulative peak energy prior to the idle period.

Fig.2 shows an example for peak shaving of an industrial load. The dotted line represents a conservative estimate on the remaining cumulative peak energy for the day relative to nominal battery energy. The load peaks occur during the working shift, which ends at 19h. As can be seen from the dotted line, peaks are not expected after even about 18:30h. During the day, the battery controller recharges the battery after each load peak, provided that the present SoC is lower than 90% (dashed line). Once the estimate of the remaining peak energy falls below 90% of the battery capacity, this value is used as a lower SoC limit for recharge. 10% more is set as the upper SoC limit (solid line) to which the battery is recharged, if applicable. The upper SoC limit for recharge during the night is set to an idle value of 20%.

The upper SoC value for the idle period can be determined by trading off the cycle degradation (which increases if the SoC value is too low and the battery depletes completely, thus introducing a maximum DoD cycle) and the calendar aging (which favours low SoCs).

In a first variant the control strategy is based on a less conservative approach, by dropping the lower SoC limit for recharge immediately to 0% or a low, progressively decreasing safety value and the upper limit immediately to the idle value once the estimated remaining peak energy falls below a threshold of e.g. 90% of the nominal battery energy. This implies that recharging is excluded during a transition period prior to the idle period, and a safety margin for unexpected peaks is reduced correspondingly.

In a second variant the control strategy includes dropping the SoC limits at a certain time instead of basing on an estimate of the remaining peak energy.

In a further variant the proposed controller distinguishes more than operational vs. idle periods. For instance, in an industrial load peak shaving application, there may be days with higher or lower expected peak energy, where the peak energy is the energy the battery needs to supply until recharging can take place. While the BESS system is designed for a certain maximum peak energy, in periods (e.g. days) with lower (expected) peak energy, a lower SoC is sufficient to serve the peak shaving. For these periods, lowering the SoC will also result in a slow-down of the calendar aging of the battery.

A controller or battery control unit with adequate processing power is provided and configured to execute at least the reduction or adjustment of the target SoC by controlling the battery de-charging and/or recharging events accordingly. This controller may be integral with a BESS controller that optimizes the operation of the BESS based on any static SoC set-point of the battery, and which may be based in particular on predictive optimization.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of controlling a Battery Energy Storage System BESS for peak load shaving or capacity firming through provision of battery power to an industrial customer or to a utility power grid, respectively, comprising
- estimating a future load or production profile,
- identifying, in the load profile, an idle period with a normalized peak load energy that is lower than a normalized peak load energy in an active period preceding the idle period, or identifying, in the production profile, an idle period with a normalized source energy deficit that is lower than a normalized source energy deficit in an active period preceding the idle period, and
- reducing a target State of Charge SoC of the BESS during the idle period.

2. The method of claim 1, comprising
- lowering a SoC of the battery to the target SoC by providing battery power to the industrial customer or to the utility power grid, respectively, in the absence of a peak load or source power deficit.

3. The method of claim 1, comprising
- lowering gradually, prior to the idle period, a SoC of the battery towards the target SoC by providing battery power to the industrial customer or to the utility power grid, respectively, in a peak load shaving event or source power deficit compensation event.

4. A controller for a Battery Energy Storage System BESS for peak load shaving or capacity firming through provision of battery power to an industrial customer or to a utility power grid, respectively, configured to
- lower a SoC of the battery to or towards a target State of Charge SoC for an idle period, which target SoC is reduced compared to a target SoC for an active period preceding the idle period, and wherein an estimated normalized peak load energy for the idle period is below an estimated normalized peak load energy of the active period, or wherein an estimated normalized source energy deficit for the idle period is lower than an estimated normalized source energy deficit of the active period.
